# EUROPÄISCHE PATENTSCHRIFT

(11) **EP 0 894 244 B1**
(45) Veröffentlichungstag und Bekanntmachung des Hinweises auf die Patenterteilung: **11.09.2002**
(21) Anmeldenummer: 97908263.3
(22) Anmeldetag: 19.03.1997
(51) Int. Cl.: G01D 13/22

(54) **ZEIGERINSTRUMENT**
POINTER INSTRUMENT
INSTRUMENT A AIGUILLE

(30) Priorität: 19.04.1996 DE 19615499
(43) Veröffentlichungstag der Anmeldung: 03.02.1999
(73) Patentinhaber: Siemens Aktiengesellschaft, 80333 München (DE)
(72) Erfinder: OLBRICH, Helmut, D-64287 Darmstadt (DE); KOLIBIUS, Hans, D-64832 Babenhausen (DE); NOLL, Heinrich, D-64823 Gro -Umstadt (DE); ZECH, Stephan, D-65343 Eltville (DE)
(86) Internationale Anmeldenummer: EP9701381
(87) Internationale Veröffentlichungsnummer: WO97040346

(56) Entgegenhaltungen:
- DE-A- 4 129 057
- GB-A- 2 004 065
- US-A- 5 222 803

## Beschreibung

Die Erfindung betrifft ein Zeigerinstrument mit einer einen im wesentlichen transparenten Zeiger auslenkenden Zeigerwelle, mit einem unmittelbar in eine Zeigerfahne des Zeigers einstrahlenden Leuchtmittel, mit einem Träger, welcher auf der Zeigerwelle befestigt ist, den Zeiger haltert und Kontaktflächen zur Kontaktierung des Leuchtmittels hat, mit einer Anschlußkontakte für eine Verbindung mit einer Stromversorgung aufweisenden Anschlußhülse und mit Leitern zur Verbindung der Anschlußkontakte und den Kontaktflächen.

Ein solches Zeigerinstrument, bei dem das Leuchtmittel zusammen mit dem Zeiger auf dem Träger befestigt ist und unmittelbar in die Zeigerfahne einstrahlt, ist bekannt. Hierbei weist der Träger einen elektrisch leitenden, mit einem Pol des Leuchtmittels verbundenen Innenkörper und einen elektrisch leitenden, mit dem anderen Pol des Leuchtmittels verbundenen Außenkörper auf, wobei Innenkörper und Außenkörper durch eine Isolation voneinander getrennt sind. Die Anschlußhülse hat einen mit der Zeigerwelle verbundenen Innenkörper und einen Außenkörper, welche durch eine Isolationsschicht voneinander getrennt sind und jeweils Anschlußkontakte aufweisen. Die Stromzufuhr zu den Anschlußkontakten der Anschlußhülse erfolgt durch zwei spiralförmige Federstreifen, welche unter Zwischenschaltung einer Isoiationsschicht sandwichartig aufgebaut sind. Der Innenkörper und der Außenkörper der Anschlußhülse sind jeweils mit einem der Federstreifen verbunden. Die elektrische Verbindung des Trägers mit der Anschlußhülse wird über die Zeigerwelle und über eine zwischen den Außenkörpern des Trägers und der Anschlußhülse angeordnete Druckfeder erreicht.

Nachteilig bei einem solchen Zeigerinstrument ist, daß die Anschlußhülse und der Träger aus sehr vielen Bauteilen bestehen, welche aufwendig herzustellen und zu montieren sind. Weiterhin sind zwischen der Stromversorgung und dem Leuchtmittel unnötig viele Kontaktstellen vorhanden, welche die Funktionssicherheit des Zeigerinstrumentes beeinträchtigen. Da die Druckfeder den Träger und die Anschlußhülse auseinanderdrückt, müssen diese, um eine dauerhafte Versorgung des Leuchtmittels mit elektrischem Strom sicherzustellen, besonders fest mit der Zeigerwelle verbunden sein.

Aus DE 41 29 057 A1 ist ein Zeigerinstrument mit einem eine elektrische Lichtquelle aufweisenden, auf einer drehbaren Zeigerwelle befestigten Zeiger bekannt, wobei elektrische Energie mittels einer Ringspule in einem feststehenden Teil und einer zweiten Ringspule im Zeiger zu dem Zeiger übertragen wird.

Einen Anzeiger mit beleuchtetem Zeiger stellt GB 2 004 065 A dar. Dabei ist der Zeiger mit Hilfe von zwei Isolierhülsen, zwei leitenden zylindrischen Bauteilen, mehreren Stiften und einer Zeigerwelle mit einer elektrischen Energieversorgung verbunden.

Ferner zeigt US 5,222,803 A eine Lampenfassung für eine Glühbirne, wobei die Fassung zahlreiche Bauteile, darunter Kontaktelemente aus elektrisch leitendem Kunststoff, aufweist.

Der Erfindung liegt das Problem zugrunde, ein Zeigerinstrument der eingangs genannten Art so zu gestalten, daß es einfach aufgebaut ist und eine besonders hohe Funktionssicherheit hat.

Dieses Problem wird erfindungsgemäß dadurch gelöst, daß die Anschlußhülse an ihrem dem Zeiger zugewandten Ende den Träger bildet, daß die Leiter von den Anschlußkontakten bis zu den Kontaktflächen durchgehend verlaufen und daß die Anschlußhülse aus einem nichtleitfähigen Kunststoff und die Leiter, die Kontaktflächen und die Anschlußkontakte aus leitfähigem Kunststoff hergestellt sind.

Durch diese Gestaltung ist das erfindungsgemäße Zeigerinstrument besonders einfach aufgebaut. Die Stromzufuhr zu dem Leuchtmittel erfolgt dadurch nicht mehr wie bei dem bekannten Zeigerinstrument über die in der Regel aus Metall gefertigte Zeigerwelle oder über die Druckfeder, sondern über die von den Anschlußkontakten bis zu den Kontaktflächen durchgehenden Leiter. Hierdurch wird die Anzahl der Kontaktstellen so gering wie möglich gehalten, was die Funktionssicherheit des erfindungsgemäßen Zeigerinstrumentes erhöht. Die Verwendung von elektrisch leitendem Kunststoff trägt ebenfalls der Funktionssicherheit des Zeigerinstruments bei, da elektrisch leitender Kunststoff nicht wie beispielsweise Metall auf Dauer von einer elektrisch isolierenden Oxidschicht überzogen wird. Ein weiterer Vorteil der Anschlußhülse besteht darin, daß sie ein besonders geringes Gewicht hat, so daß sie die Bewegung des Zeigers kaum durch ihre Massenträgheit zu behindern vermag. Die Anschlußhülse läßt sich beispielsweise vollständig durch Kunststoffspritzguß herstellen, so daß eine anschließende Montage entfällt. Hierdurch ist die Anschlußhülse besonders kostengünstig gestaltet.

Das erfindungsgemäße Zeigerinstrument läßt sich einfach montieren, wenn die Anschlußkontakte als Steckkontakte ausgebildet sind. Hierdurch wird die Anschlußhülse zur Montage einfach auf die Zeigerwelle aufgesteckt.

Die Anschlußhülse ist besonders platzsparend gestaltet und hat dabei eine gute mechanische Verbindung mit dem Zeiger, wenn sie gemäß einer vorteilhaften Weiterbildung der Erfindung pilzförmig gestaltet ist und den Zeiger mit seinem Hutbereich haltert.

Das Leuchtmittel könnte beispielsweise ein Glühfaden sein. Das Leuchtmittel hat jedoch einen besonders niedrigen Energieverbrauch und vermag den Zeiger gut auszuleuchten, wenn es ein LED-Chip ist. Weiterhin hat ein solcher LED-Chip eine im Vergleich zu anderen Leuchtmitteln besonders hohe Lebensdauer, so daß ein Austausch des Leuchtmittels während der Lebensdauer des Zeigerinstruments nur selten oder überhaupt nicht erfolgen muß.

Die Zeigerfahne wird besonders gut ausgeleuchtet, ohne daß sich der Montageaufwand des Zeigerinstrumentes erhöht, wenn gemäß einer vorteilhaften Weiterbildung der Erfindung auf dem dem Zeiger zugewandten Ende der Anschlußhülse Reflektoren aus elektrisch leitfähigem Kunststoff angeordnet sind und wenn zumindest zwei Reflektoren als Kontaktflächen zur Kontaktierung des Leuchtmittels ausgebildet sind.

Das Leuchtmittel ist leicht auszuwechseln, wenn die Anschlußhülse gemäß einer anderen vorteilhaften Weiterbildung der Erfindung an ihrem dem Zeiger zugewandten Ende eine senkrecht stehende, im Querschnitt C-förmige, nach oben und in Richtung Zeigerfahne offene Fassung mit darin angeordneten Kontaktflächen hat und wenn das Leuchtmittel auf einer Platine angeordnet ist, welche zum Einschieben in die Fassung ausgebildet ist. Hierdurch läßt sich die Anschlußhülse als Standardbauteil für unterschiedliche Zeigerinstrumente fertigen, welche unterschiedlich helle oder verschieden farbige Zeiger haben sollen.

Um die Helligkeit insbesondere von Leuchtdioden einzustellen, werden diesen häufig Abgleichswiderstände vorgeschaltet. Diese Abgleichswiderstände gestalten sich besonders einfach, wenn auf der Oberfläche der Anschlußhülse ein flächiger Abgleichswiderstand aufgetragen ist. Ein solcher flächiger Abgleichswiderstand läßt sich beispielsweise mit einem Laserstrahl abtragen, bis der gewünschte Widerstandswert und damit die gewünschte Helligkeit des Leuchtmittels erreicht ist.

Häufig schwenkt der Zeiger des erfindungsgemäßen Zeigerinstrumentes nur über einen Bereich von 120° bis 270°. Dann gestaltet sich die elektrische Verbindung der Anschlußhülse mit der Stromversorgung gemäß einer anderen vorteilhaften Weiterbildung der Erfindung besonders einfach, wenn die Anschlußhülse aus leitfähigem Kunststoff angespritzte, wellenförmige Drähte hat. Dank der Wellenform lassen sich die Drähte leicht biegen und strecken, wodurch die Bewegung der Zeigerwelle nicht behindert wird.

Die Kontaktierung der Anschlußhülse mit der Stromversorgung des Zeigerinstrumentes gestaltet sich gemäß einer anderen vorteilhaften Weiterbildung der Erfindung besonders platzsparend, wenn an den Anschlußkontakten der Anschlußhülse eine bifilare Schraubenfeder mit einer schwachen Federkraft angelötet ist.

Bei über einen besonders großen Bereich schwenkenden Zeigern kann die Anschlußhülse wie bei dem bekannten Zeigerinstrument mit Spiralfedern kontaktiert werden, welche dann an der Anschlußhülse angelötet oder angesteckt werden müßten. Diese Spiralfedern könnten entweder eine besonders schwache Federkraft besitzen oder paarweise und gegensinnig angeordnet sein. Die Kontaktierung der Anschlußhülse mit der Stromversorgung gestaltet sich jedoch konstruktiv besonders einfach, wenn das Zeigerinstrument eine flexible, spiralförmige Folie mit aufgedruckten Leiterbahnen hat und die Leiterbahnen mit der Stromversorgung und den Anschlußkontakten der Anschlußhülse verlötet oder verklemmt sind. Eine solche Folie ist besonders kostengünstig herstellbar und hat eine kaum wahrnehmbare Federkraft.

Die Kontaktierung der Anschlußhülse mit der Stromversorgung gestaltet sich gemäß einer anderen vorteilhaften Weiterbildung der Erfindung besonders einfach, wenn zwischen der Anschlußhülse und der Stromversorgung ein Streifen einer Heißklebefolie mit darauf aufgedruckten Leiterbahnen angeordnet ist, wobei die Heißklebefolie in einer Grundstellung des Zeigers zwischen der Stromversorgung und der Anschlußhülse U-förmig geschwungen ist. Durch ein Erwärmen der Heißklebefolie bei gleichzeitigem Anpressen auf die Anschlußkontakte der Anschlußhülse und der Stromversorgung ist diese befestigt und gleichzeitig kontaktiert.

Die Anschlußhülse ist gemäß einer anderen vorteilhaften Weiterbildung der Erfindung schnell zu montieren und zu demontieren, wenn die Anschlußhülse auf ihrem Umfang in unterschiedlicher Höhe umlaufende Schleifringe hat, gegen die vorgespannte, mit der Stromversorgung des Zeigerinstrumentes verbundene Kontaktfedern anliegen. Da hierbei die Anzahl der Schleifringe nur durch die Abmessungen der Anschlußhülse begrenzt ist, lassen sich hierbei sehr einfach mehrere Leuchtmittel einsetzen und unterschiedlich ansteuern. Beispielsweise können mehrere Leuchtmittel mit unterschiedlichen Farben eingesetzt werden und der Zeiger kann bei verschiedenen Zuständen unterschiedlich farbig leuchten.

Die Anschlußhülse hat keine mechanische Verbindung zur Stromversorgung des Zeigerinstrumentes, wenn die Anschlußhülse eine erste Spule hat, welche einer zweiten Spule des Zeigerinstrumentes gegenüberliegt, wobei die zweite Spule zum Aufbauen eines Magnetfeldes und zur Erzeugung eines elektrischen Stroms in der ersten Spule ausgebildet ist. Diese Gestaltung ist besonders bei Zeigern vorteilhaft, die eine möglichst geringe Eigendämpfung besitzen sollen. Weiterhin ist hierbei die Gefahr einer Verschmutzung von Schleifringen oder ein Bruch von Federn und Folien ausgeschlossen.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine Schnittdarstellung durch einen oberen Bereich eines erfindungsgemäßen Zeigerinstrumentes mit einem auf einer Anschlußhülse befestigten Zeiger,
- Fig.2: eine Draufsicht auf die Anschlußhülse aus Figur 1,
- Fig.3: eine Anschlußhülse mit darauf angeordneten Abgleichswiderständen,
- Fig.4: eine Anschlußhülse mit einer Fassung für ein auf einer Platine befestigtes Leuchtmittel,
- Fig.5: eine Schnittdarstellung durch einen oberen Bereich eines Zeigerinstrumentes mit einer gekröpften Anschlußhülse.

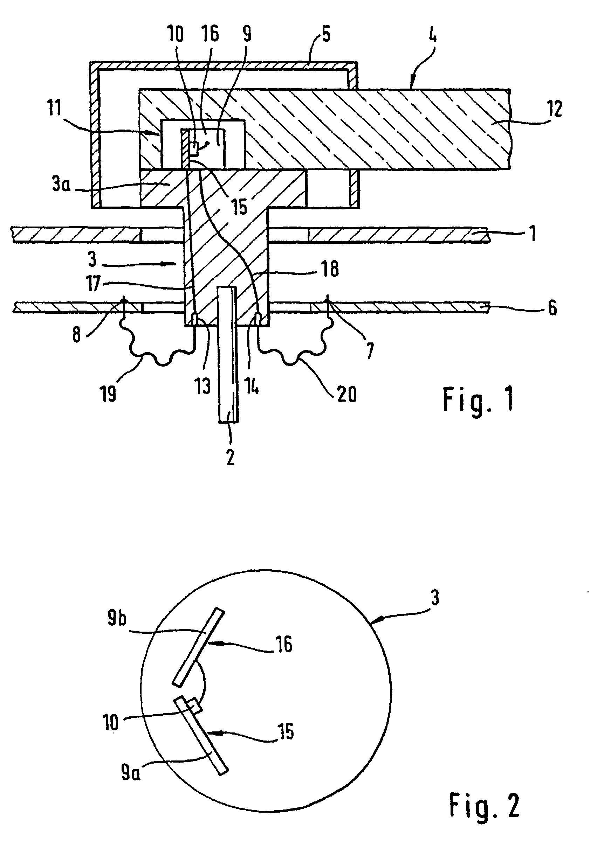

Die Figur 1 zeigt einen Ausschnitt eines Zeigerinstrumentes mit einem Zifferblatt 1, welches von einer auf einer Zeigerwelle 2 aufgesteckten Anschlußhülse 3 durchdrungen ist. Auf der Anschlußhülse 3 ist ein Zeiger 4 befestigt. Der Zeiger 4 hat im Bereich der Anschlußhülse 3 eine Kappe 5 aus einem lichtundurchlässigen Material. Unterhalb des Zifferblattes 1 ist eine Platine 6 mit Kontakten 7, 8 für eine Stromversorgung angeordnet. Auf der Oberseite der Anschlußhülse 3 befindet sich ein aufrecht stehender Reflektor 9 mit einem Leuchtmittel 10, die in eine Ausnehmung 11 des Zeigers 4 hineinragen. Der Reflektor 9 und das Leuchtmittel 10 sind so ausgerichtet, daß von ihnen abgestrahltes Licht unmittelbar in eine Zeigerfahne 12 des Zeigers 4 einstrahlt.

Die Anschlußhülse 3 ist aus nicht leitfähigem Kunststoff gefertigt und hat von Anschlußkontakten 13, 14 an ihrer Unterseite bis zu Kontaktflächen 15, 16 an ihrer Oberseite durchgehende Leiter 17, 18 aus leitfähigem Kunststoff. Zur Versorgung des Leuchtmittels mit elektrischer Energie sind an den Anschlußkontakten 13, 14 der Anschlußhülse 3 wellenförmige Drähte 19, 20 aus leitfähigem Kunststoff angespritzt.

Die Figur 2 zeigt die Anschlußhülse 3 aus Figur 1 von oben. Hier ist deutlich zu erkennen, daß auf der Anschlußhülse 3 zwei Reflektoren 9a, 9b angeordnet sind, welche gleichzeitig Kontaktflächen 15, 16 für das Leuchtmittel 10 darstellen. Das Leuchtmittel 10 ist hier ein auf die Reflektoren 9a, 9b aufgebondeter LED-Chip.

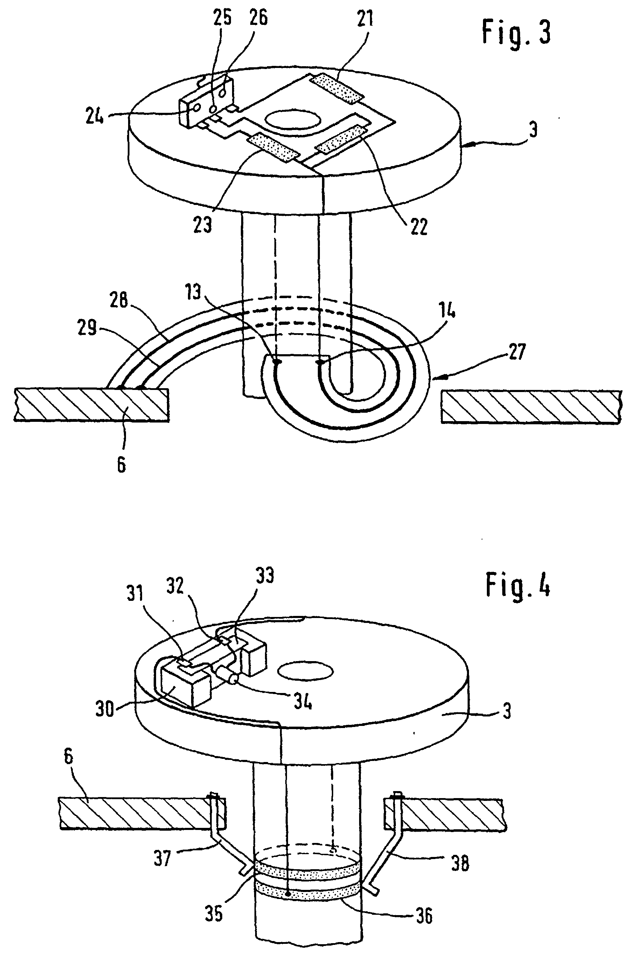

Die Figur 3 zeigt mehrere auf der Oberseite der Anschlußhülse 3 aufgebrachte Abgleichswiderstände 21 - 23, die jeweils mit einem Leuchtmittel 24 - 26 verbunden sind. Die Abgleichswiderstände 21 - 23 können durch ein Abtragen mittels eines Laserstrahls verändert werden, so daß sich damit eine gleichmäßige Helligkeit der Leuchtmittel 24 - 26 einstellen läßt. Die Anschlußkontakte 13, 14 der Anschlußhülse 3 sind mit auf eine flexible spiralförmige Folie 27 gedruckten Leiterbahnen 28, 29 verlötet. Das andere Ende der Folie 27 ist zur Stromversorgung mit der Platine 6 verbunden.

In Figur 4 hat die Anschlußhülse 3 eine an ihrem dem in Figur 1 dargestellten Zeiger 4 zugewandten Ende eine senkrecht stehende und im Querschnitt C-förmige Fassung 30 mit darin eingearbeiteten Kontaktflächen 31, 32. Diese Fassung 30 ist zur Aufnahme eines auf einer Platine 33 angeordneten Leuchtmittels 34 ausgebildet. Die Platine 33 ist in die Fassung 30 eingeschoben und gleichzeitig mit den Kontaktflächen 31, 32 in der Anschlußhülse 3 kontaktiert. Die elektrische Verbindung der Anschlußhülse 3 mit der Stromversorgung erfolgt über um die Anschlußhülse 3 umlaufende Schleifringe 35, 36, an welcher auf der Platine 6 befestigte Kontaktfedern 37, 38 anliegen.

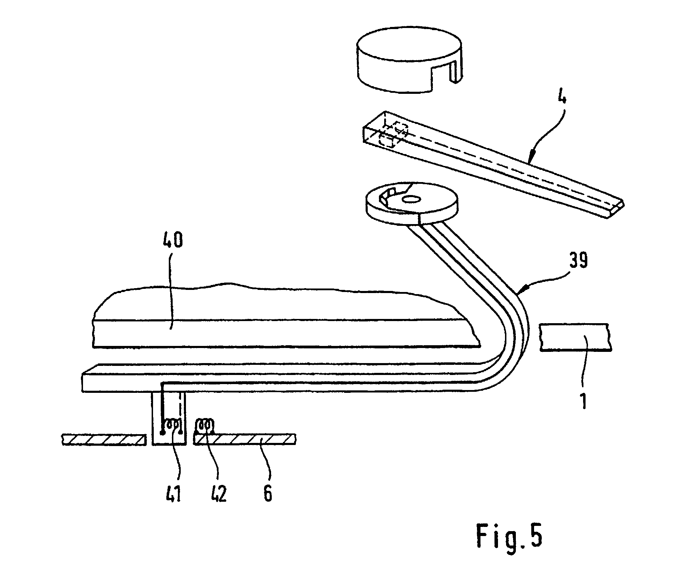

Die Figur 5 zeigt eine abgekröpfte Anschlußhülse 39, welche an ihrem dem Zeiger 4 zugewandten Ende wie in Figur 1 beschrieben gestaltet ist. Durch die Verwendung der abgekröpften Anschlußhülse 39 kann in einem radial inneren Bereich des Zeigerinstruments ein LCD-Bildschirm 40 angeordnet werden, während sich das Zifferblatt 1 in einem radial äußeren Bereich befindet. Die Versorgung des in Figur 1 dargestellten Leuchtmittels 10 mit elektrischem Strom erfolgt über eine in der Anschlußhülse 39 befindlichen erste Spule 41 und eine auf der Platine 6 angeordneten zweiten Spule 42. Diese Spulen 41, 42 sind einander gegenüberliegend angeordnet, so daß der elektrische Strom durch Induktion von der zweiten Spule 42 auf die erste Spule 41 übertragen wird.

## Patentansprüche

1. Zeigerinstrument mit einer einen im wesentlichen transparenten Zeiger auslenkenden Zeigerwelle, mit einem unmittelbar in eine Zeigerfahne des Zeigers einstrahlenden Leuchtmittel, mit einem Träger, welcher auf der Zeigerwelle befestigt ist, den Zeiger haltert und Kontaktflächen zur Kontaktierung des Leuchtmittels hat, mit einer Anschlußkontakte für eine Verbindung mit einer Stromversorgung aufweisenden Anschlußhülse und mit Leitern zur Verbindung der Anschlußhülse und dem Träger, **dadurch gekennzeichnet, daß** die Anschlußhülse (3, 39) an ihrem dem Zeiger (4) zugewandten Ende den Träger (3a) bildet, daß die Leiter (17, 18) von den Anschlußkontakten (13, 14) bis zu den Kontaktflächen (15, 16) durchgehend verlaufen und daß die Anschlußhülse (3, 39) aus einem nichtleitfähigen Kunststoff und die Leiter (17, 18), die Kontaktflächen (15, 16) und die Anschlußkontakte (13, 14) aus leitfähigem Kunststoff hergestellt sind.

2. Zeigerinstrument nach Anspruch 1, **dadurch gekennzeichnet, daß** die Anschlußkontakte (13, 14) als Steckkontakte ausgebildet sind.

3. Zeigerinstrument nach Anspruch 1 oder 2, **dadurch gekennzeichnet, daß** die Anschlußhülse (3, 39) pilzförmig gestaltet ist und den Zeiger (4) mit seinem Hutbereich haltert.

4. Zeigerinstrument nach zumindest einem der vorhergehenden Ansprüche, **dadurch gekennzeichnet, daß** das Leuchtmittel (10, 24 - 26, 34) ein LED-Chip ist.

5. Zeigerinstrument nach zumindest einem der vorhergehenden Ansprüche, **dadurch gekennzeichnet, daß** auf dem dem Zeiger (4) zugewandten Ende der Anschlußhülse (3, 39) Reflektoren (9a, 9b) aus elektrisch leitfähigem Kunststoff angeordnet sind und daß zumindest zwei Reflektoren (9a, 9b) als Kontaktflächen (15, 16) zur Kontaktierung des Leuchtmittels (10, 24 - 26, 34) ausgebildet sind.

6. Zeigerinstrument nach zumindest einem der vorhergehenden Ansprüche, **dadurch gekennzeichnet, daß** die Anschlußhülse (3, 39) an ihrem dem Zeiger (4) zugewandten Ende eine senkrecht stehende, im Querschnitt C-förmige, nach oben und in Richtung Zeigerfahne (12) offene Fassung (30) mit darin angeordneten Kontaktflächen (31, 32) hat, und daß das Leuchtmittel (34) auf einer Platine (33) angeordnet ist, welche zum Einschieben in die Fassung (30) ausgebildet ist.

7. Zeigerinstrument nach zumindest einem der vorhergehenden Ansprüche, **dadurch gekennzeichnet, daß** auf der Oberfläche der Anschlußhülse (3, 39) ein flächiger Abgleichwiderstand (21, 23) aufgetragen ist.

8. Zeigerinstrument nach zumindest einem der vorhergehenden Ansprüche, **dadurch gekennzeichnet, daß** die Anschlußhülse (3, 39) aus leitfähigem Kunststoff angespritzte, wellenförmige Drähte (19, 20) hat.

9. Zeigerinstrument nach zumindest einem der vorhergehenden Ansprüche, **dadurch gekennzeichnet, daß** an den Anschlußkontakten (13, 14) der Anschlußhülse (3, 39) eine bifilare Schraubenfeder mit einer schwachen Federkraft angelötet ist.

10. Zeigerinstrument nach zumindest einem der vorhergehenden Ansprüche, **dadurch gekennzeichnet, daß** das Zeigerinstrument eine flexible, spiralförmige Folie (27) mit aufgedruckten Leiterbahnen (28, 29) hat und die Leiterbahnen (28, 29) mit der Stromversorgung und den Anschlußkontakten (13, 14) der Anschlußhülse (3, 39) verlötet oder verklemmt sind.

11. Zeigerinstrument nach zumindest einem der vorhergehenden Ansprüche, **dadurch gekennzeichnet, daß** zwischen der Anschlußhülse (3, 39) und der Stromversorgung ein Streifen einer Heißklebefolie mit darauf aufgedruckten Leiterbahnen angeordnet ist, wobei die Heißklebefolie in einer Grundstellung des Zeigers (4) zwischen der Stromversorgung und der Anschlußhülse (3, 39) U-förmig geschwungen ist.

12. Zeigerinstrument nach zumindest einem der vorhergehenden Ansprüche, **dadurch gekennzeichnet, daß** die Anschlußhülse (3, 39) auf ihrem umfang in unterschiedlicher Höhe umlaufende Schleifringe (35, 36) hat, gegen die vorgespannte, mit der Stromversorgung (Platine 6) des Zeigerinstrumentes verbundene Kontaktfedern (37, 38) anliegen.

13. Zeigerinstrument nach zumindest einem der vorhergehenden Ansprüche, **dadurch gekennzeichnet, daß** die Anschlußhülse (3, 39) eine erste Spule (41) hat, welche einer zweiten Spule (42) des Zeigerinstrumentes gegenüberliegt, wobei die zweite Spule (42) zum Aufbauen eines Magnetfeldes und zur Erzeugung eines elektrischen Stroms in der ersten Spule (41) ausgebildet ist.

## Claims

1. Pointer instrument having a pointer shaft that deflects an essentially transparent pointer, having an illuminating means that radiates directly into a flag of the pointer, having a carrier which is fastened to the pointer shaft, holds the pointer and has contact surfaces for making contact with the illuminating means, having a connecting sleeve that has connecting contacts for a connection to a power supply, and having conductors to connect the connecting sleeve and the carrier, **characterized in that** the connecting sleeve (3, 39) forms the carrier (3a) at its end facing the pointer (4), **in that** the conductors (17, 18) run continuously from the connecting contacts (13, 14) to the contact surfaces (15, 16), and **in that** the connecting sleeve (3, 39) is produced from a nonconductive plastic and the conductors (17, 18), the contact surfaces (15, 16) and the connecting contacts (13, 14) are produced from conductive plastic.

2. Pointer instrument according to Claim 1, **characterized in that** the connecting contacts (13, 14) are designed as plug-in contacts.

3. Pointer instrument according to Claim 1 or 2, **characterized in that** the connecting sleeve (3, 39) is of mushroom-like configuration and holds the pointer (4) with its cap region.

4. Pointer instrument according to at least one of the preceding claims, **characterized in that** the illuminating means (10, 24-26, 34) is an LED chip.

5. Pointer instrument according to at least one of the preceding claims, **characterized in that** reflectors (9a, 9b) of electrically conductive plastic are arranged at that end of the connecting sleeve (3, 39) which faces the pointer (4), and **in that** at least two reflectors (9a, 9b) are designed as contact surfaces (15, 16) for making contact with the illuminating means (10, 24-26, 34).

6. Pointer instrument according to at least one of the preceding claims, **characterized in that** the connecting sleeve (3, 39) has, at its end facing the pointer (4), a mount (30) which is upright, of C-shaped cross section, is open at the top and in the direction of the pointer flag (12) and has contact surfaces (31, 32) arranged in it, and **in that** the illuminating means (34) is arranged on a circuit board (33) which is designed to be pushed into the mount (30).

7. Pointer instrument according to at least one of the preceding claims, **characterized in that** a planar balancing resistor (21, 23) is applied to the surface of the connecting sleeve (3, 39).

8. Pointer instrument according to at least one of the preceding claims, **characterized in that** the connecting sleeve (3, 39) has sinuous wires (19, 20) of conductive plastic that are injection moulded on.

9. Pointer instrument according to at least one of the preceding claims, **characterized in that** a bifilar helical spring with a low spring force is soldered onto the connecting contacts (13, 14) of the connecting sleeve (3, 39).

10. Pointer instrument according to at least one of the preceding claims, **characterized in that** the pointer instrument has a flexible, spiral sheet (27) with conductor tracks (28, 29) printed on it, and the conductor tracks (28, 29) are soldered or clamped to the power supply and to the connecting contacts (13, 14) of the connecting sleeve (3, 39).

11. Pointer instrument according to at least one of the preceding claims, **characterized in that** a strip of a heat-seal sheet with conductor tracks printed on it is arranged between the connecting sleeve (3, 39) and the power supply, the heat-seal sheet being swept in a U shape between the power supply and the connecting sleeve (3, 39) when the pointer (4) is in a basic position.

12. Pointer instrument according to at least one of the preceding claims, **characterized in that** the connecting sleeve (3, 39) has slip rings (35, 36) running around its circumference at different heights, against which prestressed contact springs (37, 38) rest, these springs being connected to the power supply (circuit board 6) of the pointer instrument.

13. Pointer instrument according to at least one of the preceding claims, **characterized in that** the connecting sleeve (3, 39) has a first coil (41), which is located opposite a second coil (42) of the pointer instrument, the second coil (42) being designed to set up a magnetic field and to generate an electric current in the first coil (41).

## Revendications

1. Instrument à aiguille comportant un pivot orientant une aiguille sensiblement transparente, un organe lumineux rayonnant directement dans un pointeur de l'aiguille, un support qui est fixé sur le pivot de l'aiguille, maintient l'aiguille et présente des surfaces de contact pour établir la connexion de l'organe lumineux, une pièce de connexion présentant des contacts de jonction pour assurer un raccordement à une alimentation électrique et des conducteurs pour relier la pièce de connexion et le support, **caractérisé en ce que** la pièce de connexion (3, 39) forme le support (3a) à son extrémité tournée vers l'aiguille (4), **en ce que** les conducteurs (17, 18) passent en continu des contacts de jonction (13, 14) aux surfaces de contact (15, 16), **en ce que** la pièce de connexion (3, 39) est réalisée dans un plastique non conducteur et **en ce que** les conducteurs (17, 18), les surfaces de contact (15, 16) et les contacts de jonction (13, 14) sont réalisés en un plastique conducteur.

2. Instrument à aiguille selon la revendication 1, **caractérisé en ce que** les contacts de jonction (13, 14) sont conçus comme des contacts à enficher.

3. Instrument à aiguille selon la revendication 1 ou 2, **caractérisé en ce que** la pièce de connexion (3, 39) est en forme de champignon et maintient l'aiguille par la zone de son chapeau.

4. Instrument à aiguille selon au moins l'une des revendications précédentes, **caractérisé en ce que** l'organe lumineux (10, 24 - 26, 34) est une puce à LED.

5. Instrument à aiguille selon au moins l'une des revendications précédentes, **caractérisé en ce que** des réflecteurs (9a, 9b) réalisés en un plastique électriquement conducteur sont disposés à l'extrémité de la pièce de connexion (3, 39) tournée vers l'aiguille (4) et **en ce que**, au moins deux réflecteurs (9a, 9b) sont conçus comme des surfaces de contact (15, 16) pour l'établissement de la connexion de l'organe lumineux (10, 24 - 26, 34).

6. Instrument à aiguille selon au moins l'une des revendications précédentes, **caractérisé en ce que** la pièce de connexion (3, 39) a, sur son extrémité toumée vers l'aiguille (4), une monture (30) verticale, de section transversale en forme de C, ouverte vers le haut et en direction du pointeur de l'aiguille (12) avec des surfaces de contact (31, 32) disposées à l'intérieur et **en ce que** l'organe lumineux (34) est disposé sur une platine (33) conçue pour s'insérer dans la monture (30).

7. Instrument à aiguille selon au moins l'une des revendications précédentes, **caractérisé en ce qu'**une résistance de compensation plane (21, 23) est placée sur la surface de la pièce de connexion (3, 39).

8. Instrument à aiguille selon au moins l'une des revendications précédentes, **caractérisé en ce que** la pièce de connexion (3, 39) présente des fils (19, 20) ondulés et moulés par injection d'une seule pièce dans un plastique conducteur.

9. Instrument à aiguille selon au moins l'une des revendications précédentes, **caractérisé en ce qu'**un ressort hélicoïdale bifilaire présentant une faible tension est soudé sur les contacts de jonction (13, 14) de la pièce de connexion (3, 39).

10. Instrument à aiguille selon au moins l'une des revendications précédentes, **caractérisé en ce que** l'instrument à aiguille a une feuille (27) flexible, en spirale et munie de pistes conductrices imprimées (28, 29) et **en ce que** les pistes conductrices (28, 29) sont brasées ou serrées avec l'alimentation électrique et les contacts de jonction (13, 14) de la pièce de connexion (3, 39).

11. Instrument à aiguille selon au moins l'une des revendications précédentes, **caractérisé en ce qu'**une bande d'une feuille thermoadhésive munie de pistes conductrices imprimées est disposée entre la pièce de connexion (3, 39) et l'alimentation électrique, de sorte que dans une position de base de l'aiguille (4), la feuille thermoadhésive est déformée en forme de U entre l'alimentation électrique et la pièce de connexion (3, 39).

12. Instrument à aiguille selon au moins l'une des revendications précédentes, **caractérisé en ce que** la pièce de connexion (3, 39) présente, sur son pourtour, des bagues collectrices (35, 36) périphériques, de hauteurs différentes contre lesquelles s'appliquent des ressorts de contact (37, 38) précontraints et reliés à l'alimentation électrique (platine 6) de l'instrument à aiguille.

13. Instrument à aiguille selon au moins l'une des revendications précédentes, **caractérisé en ce que** la pièce de connexion (3, 39) présente une première bobine (41) qui fait face à une seconde bobine (42) de l'instrument à aiguille, la seconde bobine (42) étant réalisée pour établir un champ magnétique et générer un courant électrique dans la première bobine (41).
